# EUROPEAN PATENT APPLICATION

(11) **EP 2 123 558 A1**
(43) Date of publication of application: **25.11.2009**
(21) Application number: 08736716.5
(22) Date of filing: 27.02.2008
(51) Int. Cl.: B64F 1/36, F24F 13/02

(54) **AIR CONDITIONING HOSE EXTENSION/RETRACTION DEVICE**

(30) Priority: 09.03.2007 ES 200700628
(71) Applicant: Peña Haro, Bienvenido, 28810 Madrid (ES)
(72) Inventor: Peña Haro, Bienvenido, 28810 Madrid (ES)
(74) Representative: Gonzalez Gomez, Maria Virtudes
(86) International application number: PCT/ES2008/000114
(87) International publication number: WO 2008/110642

(57) **Abstract**

Especially conceived to allow the automatic winding/unwinding of air conditioning hoses used in airports. The device is made up of a telescopic receiving device (1-1'), associated to the aircraft's boarding walkway, inside of which the air conditioning hose (4) is housed. A couple of electronically controlled gear motor groups (7-20) is established on said device, the shafts of which are associated to respective winding/unwinding drums (10) for a cable or strip (14-21), one of which passes through the front funnel (3) of the casing (1) of the receiving device, and fixed by its free end to the hose (4) at a certain distance from its front end, whereas the winding cable (14) goes into the telescopic device (1-1') through the rear area thereof, its free end being associated to a pull element (15) where a series of cables (16) are attached, which cables are linked to the hose via metal rings (17) that are integral to it.

## Description

### OBJECT OF THE INVENTION

This invention relates to an air conditioning hose winding/unwinding device for hoses of the type used in aviation to supply air conditioning to aircraft docked at the passenger boarding walkway prior to takeoff.

The object of the invention is to provide a device that allows winding/unwinding the hoses in a completely automatic manner, decreasing the risk of work-related sick leave, increasing the performance of the air conditioning machine the hoses are associated to and reducing the maintenance cost for said hoses.

The invention therefore lies within the scope of auxiliary machinery for aircraft, more specifically, that of external air conditioning supply systems.

### BACKGROUND OF THE INVENTION

As we know, when passenger aircraft is docked at the boarding walkway in an airport, they are supplied air conditioning via a series of flexible hoses that are associated to said boarding walkways.

Said flexible hoses must be manually unwound by workers, being dragged over the ground until they are plugged in to the corresponding connectors, an operation that shortens their useful life, as well as requiring considerable physical exertion, factors upon which it is convenient to improve.

In the event that the type of aircraft is one with an air conditioning connector at the back of the hold, a second hose must be unwound from another trolley and the sections must be extended for it to reach the connector's position.

Similarly, it is worth mentioning that since the hoses are wound up, the system's performance is not very high, since it is common for there to be obstructions in the hoses.

Trying to solve this problem, PCT/ES 2005/70118 describes an air conditioning hose winding and unwinding device via a motor associated to a winding cable, which only allows the winding up of said hose, such that the unwinding is still performed manually by the workers by engaging the motor, an operation that it is certainly interesting to automate.

### DESCRIPTION OF THE INVENTION

The hose winding/unwinding device of the invention satisfactorily solves the problem described above in its different aspects.

To do this, the device disclosed has a completely automatic hose winding/unwinding system that prevents said hoses to be dragged along the ground, as well as the formation of obstructions or restrictions in the ducts.

More specifically, the device object of the invention is built from a telescopic receiving device that is associated to the boarding walkway of the aircraft and accompanies it in its winding/unwinding movement, with the special feature that there are two gear motor groups that are electronically monitored and synchronised to one another, such that one of these, namely the hose extension gear motor, is placed in the front area of the receiving device, on the corresponding support or base that is integral to it, whereas a hose collection gear motor group is placed next to the rear end of said telescopic device.

According to another feature of the invention, the telescopic receiving device has a curved section on its front end, which gradually increases in diameter, determining its front funnel, the aim of which is to prevent the hose or air conditioning tube connector from getting caught in the hose winding/unwinding operations.

Contrarily, in the rear area of the telescopic receiving tube there is a 90° elbow through which the air conditioning hose coming from the air conditioning machine is connected, and the following hose sections that are inside the receiving device.

The air conditioning hose that passes through the telescopic receiving tube should be of the semi-rigid spiral type, but with the special feature of having inside it a series of metal rings or hoops duly distributed along certain distances down its entire length, with said rings being integral with the hose, affecting the first sections of the hose, projecting from the funnel of the telescopic receiving device in order to allow coupling via the connector placed on its end, having foreseen that said metal rings are fixed by any conventional means to the inside of the hoses.

A series of cables relating the rings to one another, the number of which may vary, in order to perform perfect gradual winding starting from the first sections that project from the funnel, and which will be fixed by their rear end to a main pull ring associated to a main hose winding cable, which is associated to the aforementioned gear motor group and placed next to the rear end of the telescopic receiving tube via a corresponding winding drum.

Thus, and by actuating said gear motor, the main cable is wound onto the corresponding drum, causing the winding of the hose, such that, by incorporating said cables associated to the metal rings, said cables ensure the correct winding of the hose during the winding process, without causing restrictions in the hose, which would be uniformly compressed.

Contrarily, the hose has been provided with a second pull ring, at a certain distance from the front end of the hose, the value of which will depend on the length of the extraction walkway, which pull ring is associated to an extraction strip or cable the end of which is associated to the gear motor drum established at the front end of the telescopic receiving tube, said cable passing through an opening established on the upper part of the funnel, extracting the hose.; a set of hubs or rollers facilitate its guidance.

The activation of both gear motors is controlled from a circuit established at a control box with extraction and collection controls, as well as supplementary safety systems.

Therefore, the hose winding/unwinding process will be performed totally automatically from the device control box, having foreseen that the telescopic device has sensors or photoelectric cells that prevent the walkway from withdrawing if the hose is not wound up, as well as winding stop sensors when the hose connector is within the funnel of the device, and a third photoelectric cell for activating hose winding/unwinding during passenger walkway winding/unwinding processes. This intelligent device keeps the connector located at the funnel of the device at all times, with a cell that also acts as a safety element during hose collection when the connector position detection cell fails.

It is worth mentioning that since the air conditioning hose is placed inside the telescopic device, it will be protected form the elements, thus prolonging its useful life, and preventing it from being restricted, as mentioned above.

Said hose can be formed by several sections that can be coupled to one another by means of zippers and Velcro® or by any other standard system.

Finally, we can highlight that, obviously, the device can be doubled in the event that the aircraft has an air conditioning connector at the rear of the hold, the second device being associated to another transport trolley and also allowing completely automatic hose winding/unwinding.

Similarly, and as is obvious, the two gear motor groups could be associated into a single gear motor group associated to two axes on which to place the complementary drums, which would synchronously turn in opposite directions without this affecting the essence of the invention.

### DESCRIPTION OF THE DRAWINGS

As a complement to the description being made and in order to aid towards a better comprehension of the features of the invention, according to a preferred practical embodiment thereof, we incorporate as an integral part of said description a set of drawings that are illustrative and not limiting in nature and represent the following:

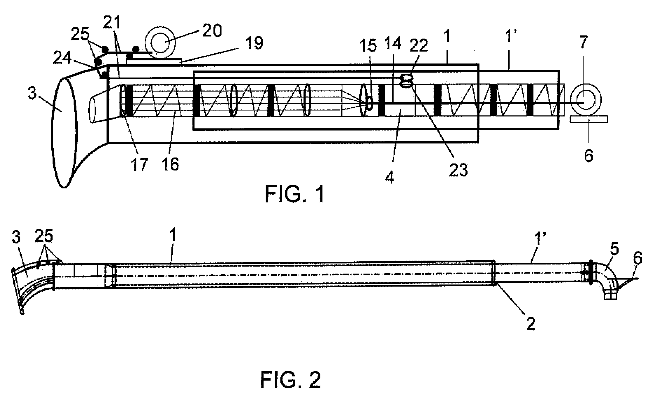

Figure 1.- Shows a diagram in elevation view and in section view of an air conditioning hose winding/unwinding device performed according to the object of the present invention.
Figure 2.- An elevation view of the telescopic receiving device of the winding/unwinding device of the invention.

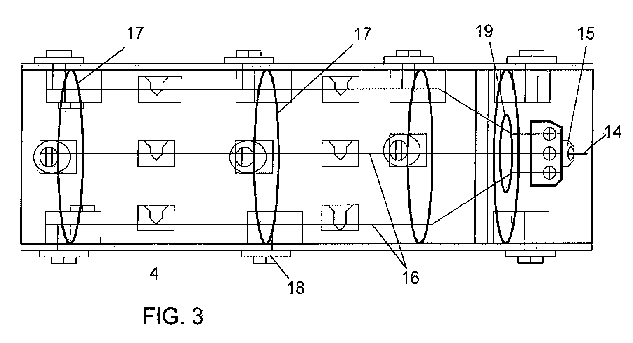

Figure 3.- Shows a detail in section view of the section of the air conditioning hose that is associated to the hose winding cables.
Figure 4.- Shows a diagram in elevation view of one of the gear motor groups that make up the invention.

### PREFERRED EMBODIMENT OF THE INVENTION

In view of the figures described we can observe how the air conditioning hose winding/unwinding device disclosed is formed by a telescopic receiving device or casing (1-1'), which in the chosen embodiment is divided into two sections (1-1'), but which could equally be divided into more telescopic sections associated to the folding/extension of the walkway they are linked to, without this affecting the essence of the invention, sections that would be materialised as tubes of different diameters such that the tube with the smallest diameter (1') can be moved within the tube of larger diameter (1), thus having wheels (2) that facilitate the folding/extraction of said assembly.

The outer tube (1), of a smaller diameter than the inner tube (1'), is capped on its free end with a curved funnel (3) in a downward direction, with a gradually increasing section towards the outside, which prevents the hose connector (4) to the corresponding aircraft to catch on said funnel during the winding and unwinding manoeuvres.

The tube with the smallest diameter (1') incorporates an elbow (5) on its free end facilitating the entry of the hose (4) from the air conditioning machine, not shown in the figures.

Therefore, the telescopic receiving device lies upon cold rolled steel supports, fixed to supports that are welded onto the frame of the walkway.

The hose is complementarily formed by a plurality of sections that can be coupled to one another by zippers and Velcro® strips, the elbow (5) being fixed via a fastener such that the hose (4) in its non-operative position is folded within the telescopic device (1-1'), protected from the elements except for the section that relates said device with the air conditioning machine.

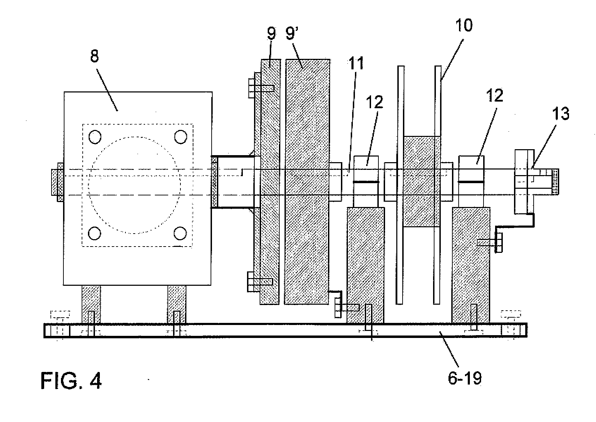

As mentioned above, at the rear area of the elbow (5) there is a base (6) for supporting a gear motor group (7), the one shown in detail in Figure 4, preferably made up of a three-phase electric motor (8), the output shaft of which is associated to a reducing and clutch system (9-9') related to a drum (10) via a shaft (11) that is associated to corresponding bearings (12), as well as an electric brake (13).

Said drum (10) is in charge of the winding/unwinding of a hose winding cable (14), the end of which is associated to a main pull ring (15) to which a series of smaller cables (16) are attached, distributed at equal angles along the surface of the hose, which they are connected to by means of metal rings (17) with corresponding fixing means (18), which rings will be established inside the hose (4), integrally to it, and which ensure the correct traction of the hose during the winding process, preventing it from twisting and causing restrictions therein.

These rings (17) will affect more than the hose section to be extracted via the funnel (3), having foreseen the incorporation of the double ring (19) cables (16) together with the pull ring (15), ensuring a uniform guidance of the cables (16) towards said pull ring (15).

Therefore, the main pull cable (14) will run inside the hose (4), which will be connected, as stated above, to the rear end of the receiving device (1-1'), namely the elbow (5), having an opening for the passage of said cable towards the gear motor group (7), with the corresponding hubs that will ensure correct guidance of the cable.

Likewise, a fibre base (19) is established on the front area of the receiving device, on which a gear motor group (20) is established, with a similar configuration to that shown in Figure 4, having foreseen that its drum is associated to a strip of fibre (21) associated to a loop and a ring (22-23) arranged externally to the hose (4) and integral with it, at a distance from its free end according to the length of the telescopic device (1-1').

Said strip will pass through an opening (24) established on the upper part of the funnel (3), and a series of hubs (25) established both inside and outside said funnel (3) will collaborate in guiding the strip.

Both gear motor groups (7-20) are electronically monitored via a circuit controlled from a control box with a two position switch: winding and unwinding.

The winding will be activated by two buttons in series, for greater safety, and can only be activated by pushing on both buttons.

Unwinding will be performed by a single button, since the safety level required during said operation is lower, since the hose is not connected to the aircraft, which button will have to be pushed continuously until the hose (4) has wound up for a distance the worker deems convenient.

Three photoelectric cells will be associated to said control circuit, a first cell in charge of preventing withdrawal of the walkway if the hose is not wound up, a second cell to detect whether or not the connector or the end of the hose is inside the funnel (3), shutting down the winding motor, and a final safety cell, supplementary to the former and associated to a circuit for activating the different gear motor groups (7-28) during the winding/unwinding operations of the telescopic device (1-1'), in order to maintain the correct position of the hose (4) connector in the funnel (3) area.

## Claims

1. An air conditioning hose winding/unwinding device for hoses of the type used for supplying air conditioning to aircraft at airports, associated on one end to an air conditioning generating machine and on the other end to a connector to be coupled to the aircraft socket, where said hoses can be made up of several sections that can be coupled to one another, of the type formed by a telescopic receiving device, preferably having a tube configuration, associated to the aircraft's boarding walkway and accompanying it with its winding/unwinding movement, inside of which the air conditioning hose (4) is housed, fixed to the rear end of the receiving tube (1') by means of which it is coupled to the air conditioning generating machine, **characterised in that** a couple of gear motor groups (7-20) is placed in said telescopic receiving device (1-1'), which are controlled automatically from a control panel, the axes of which gear motors are associated to corresponding winding/unwinding drums (10) for winding/unwinding a cable or strip (14-21), one of which passes through the front funnel (3) of the casing (1) of the receiving device, and fixed externally by its free end onto a point on the surface of the hose (4), at a distance from the front end thereof according to the length of the walkway, whereas the winding cable (14) goes inside the receiving device (1-1') via the rear end thereof, its free end being associated to a main pull element (15) that a series of cables (16) of a smaller diameter are associated to, distributed along the inner surface of one or more of the initial segments of the hose, to which they are coupled via metal rings (17) that are internally integral to said hose.

2. An air conditioning hose winding/unwinding device according to claim 1, **characterised in that** placed on the front end of the casing (1) is a funnel (3) that is curved downwards and has a section that increases gradually outwards, and which has adequate dimensions to prevent the connector from catching on said funnel (3) in the hose (4) winding and unwinding operations.

3. An air conditioning hose winding/unwinding device according to claim 1, **characterised in that** said hose winding and unwinding gear motor groups (7) and (20) are established in corresponding bases (6) and (19) that are fixed on the free ends of the casings (1') and (1) of the receiving device, respectively, having foreseen that the funnel (3) has an opening for passage of an unwinding strip (21), whereas on the rear end of the casing (1') there is an elbow (5) provided with an opening for the winding cable (14) to pass through, the cable and the strip being aided by hub sets (25) that facilitate their guidance.

4. An air conditioning hose winding/unwinding device according to claim 1, **characterised in that** three photoelectric cells are on associated to the control circuit, a first cell in charge of preventing withdrawal of the walkway if the hose is not wound up, a second cell to detect whether or not the connector or the end of the hose is inside the funnel (3), shutting down the motors, and a final safety cell, supplementary to the former and associated to a circuit for activating the different gear motor groups (7-20) during the winding/unwinding operations of the telescopic device (1-1'), in order to maintain the correct position of the hose (4) connector in the funnel (3) area.

5. An air conditioning hose winding/unwinding device according to claim 1, **characterised in that** the control panel includes a button to activate the unwinding of the hose and a couple of buttons connected electrically in series to activate hose winding.

6. An air conditioning hose winding/unwinding device according to claim 1, **characterised in that** optionally, the two gear motor groups (7-20) can be grouped into a single gear motor group associated to two shafts with two winding/unwinding drums for the hose (4) actuation cables.

7. An air conditioning hose winding/unwinding device according to claim 1, **characterised in that** the telescopic device (1-1') is provided with wheels (2) that facilitate guiding a semi-casing (1') of the receiving device into another in the winding/unwinding operations for the assembly.
